# EUROPÄISCHE PATENTSCHRIFT

(11) **EP 3 306 168 B1**
(45) Veröffentlichungstag und Bekanntmachung des Hinweises auf die Patenterteilung: **17.06.2020**
(21) Anmeldenummer: 16192565.6
(22) Anmeldetag: 06.10.2016
(51) Int. Cl.: F16L 41/00, F16L 41/08, G01F 1/00, G01F 15/18

(54) **GEWINDEEINSATZ FÜR EIN VERTEILERROHR SOWIE EIN VERTEILERROHR**
THREADED INSERT FOR A DISTRIBUTING PIPE AND DISTRIBUTING PIPE
INSERT FILETÉ POUR UN TUYAU DISTRIBUTEUR ET UN TUYAU DISTRIBUTEUR

(43) Veröffentlichungstag der Anmeldung: 11.04.2018
(73) Patentinhaber: Watts Industries Deutschland Gesellschaft mit beschränkter Haftung, 76829 Landau (DE)
(72) Erfinder: CATTARIUS, Marco, 76857 Albersweiler (DE); HAUSTEIN, Rolf, 76829 Landau (DE); HERZER, Peter, 67655 Kaiserslautern (DE); PRÜFE, Patrick, 76829 Landau (DE)
(74) Vertreter: Patentanwälte Dr. Keller, Schwertfeger Partnerschaft mbB

(56) Entgegenhaltungen:
- EP-A2- 1 207 332
- EP-A2- 1 480 018
- AU-A- 3 619 378
- DE-U1- 20 009 195
- DE-U1-202006 005 685
- US-A- 2 132 636

## Beschreibung

Die vorliegende Erfindung betrifft einen Gewindeeinsatz für ein Verteilerrohr sowie ein Verteilerrohr.

Verteilervorrichtungen mit Verteilerrohren werden beispielsweise bei einer Wärme- oder Kälteversorgungsanlage, die mit einem flüssigen Medium betrieben wird, wie etwa einer Klimaanlage oder Flächenheizung eingesetzt.

Verteilervorrichtungen mit Verteilerrohren dienen allgemein dazu Fluide zu verteilen.

Bei Klimaanlagen und Flächenheizungen sind zur Einstellung der Temperatur in den einzelnen Heiz- oder Kühlkreisen Regel- und Absperrorgane wie etwa Regulierventile und Durchflussmengenmesser in einem Rohrleitungsabschnitt, nämlich dem Verteilerrohr, vorgesehen.

Zur Aufnahme der Regel- und Absperrorgane in den aus Metall hergestellten Verteilerrohren werden bisher Gewinde in der Rohrwand des Verteilerrohrs eingearbeitet oder entsprechende Stutzen mit Gewinden vorgesehen. In diese Gewinde werden dann die Absperr- und Regelorgane eingeschraubt.

Die EP 1 207 332 A2 zeigt eine Kupplungsstruktur mit einem separaten Gewindeeinsatz.

Derzeit werden die Gewinde in der Rohrwand des Verteilerrohrs mittels einer Fließbohrung hergestellt. Um eine ordentliche Fließbohrung zu erhalten, werden bestimmte Anforderungen an die Rohrwanddicke einer Rohrleitung gestellt. Daraus ergibt sich in vielen Fällen, dass die Dicke der Rohrwand für die Durchführung einer ordnungsgemäßen Fließbohrung größer sein muss als beim bestimmungsgemäßen Einsatz der Rohrleitung.

Eine Fließbohrung ist vergleichsweise aufwändig. Üblicherweise muss die Bohrung zum Teil nachgearbeitet werden, da wegen der bei der Fließbohrung notwendigen hohen Temperaturen das metallische Rohrmaterial aufgrund von Verzunderung zu Korrosion neigt. Bei der Verwendung von Messingrohren als Verteilerrohre besteht darüber hinaus die Notwendigkeit der Durchführung eines Nachglühschrittes, um Spannungen im Material zu lösen.

Da das Verteilerrohr von einem Fluid durchströmt wird, sind die Anforderungen an die Dichtigkeit zwischen dem Verteilerrohr und dem Absperrregelorgan vergleichsweise hoch.

Es ist Aufgabe der vorliegenden Erfindung, ein Verteilerrohr für eine mit einem Fluid betriebene Verteileranlage, insbesondere für eine mit einem Fluid betriebene Wärme- oder Kälteversorgungsanlage bereitzustellen, das einfach und kostengünstig herzustellen ist und darüber hinaus die hohen Anforderungen an die Dichtigkeit erfüllt.

Unter Fluid wird im Rahmen der Erfindung sowohl ein Gas als auch eine Flüssigkeit verstanden. Erfindungsgemäß wird die Aufgabe gelöst durch einen Gewindeeinsatz nach Anspruch 1 sowie ein Verteilerrohr mit einem erfindungsgemäßen Gewindeeinsatz nach Anspruch 8.

Der erfindungsgemäße Gewindeeinsatz, der für den Einbau in ein von einem Fluid durchflossenes Verteilerrohr geeignet ist, umfasst einen hohlzylindrischen Grundkörper mit einem ersten und zweiten Endabschnitt und mit einem Innengewinde, einen Auflagekopf an dem ersten Endabschnitt des Grundkörpers, der in radialer Richtung des Grundkörpers über den Grundkörper hinausragt, einen Befestigungsabschnitt, der in axialer Richtung des Grundkörpers in einem vorgegebenen Abstand von dem Auflagekopf an dem Grundkörper angeordnet ist und in radialer Richtung über den Grundkörper hinausragt, und einen Kontaktabschnitt, der in axialer Richtung des Grundkörpers zwischen Auflagekopf und Befestigungsabschnitt angeordnet und auslegt ist, dass in einem eingebauten Zustand eine Wand einer Verteilerrohröffnung an diesem anliegt.

Unter eingebautem Zustand wird der Zustand verstanden, bei dem der Gewindeeinsatz bestimmungsgemäß in einem Verteilerrohr eingebaut ist.

Der hohlzylindrische Grundkörper ist mit seinem zweiten Endabschnitt durch eine Öffnung in einem Verteilerrohr durchführbar. Der Auflagekopf, der in radialer Richtung des Grundkörpers über den Grundkörper hinausragt, führt dazu, dass der Grundkörper nicht vollständig durch die Öffnung führbar ist, da der Auflagekopf mit seiner zum zweiten Endabschnitt des Grundkörpers weisenden Unterseite an der Innen- oder Außenseite der Wandung des Verteilerrohrs aufliegt. Die Innenwand der Verteilerrohröffnung umgibt im Bereich des Kontaktabschnitts den Gewindeeinsatz und liegt im Bereich des Kontaktabschnitts an der Außenseite des Gewindeeinsatzes an. Hierbei kann der Gewindeeinsatz im Bereich des Kontaktabschnitts reibschlüssig oder mit geringem Spiel in der Verteilerohröffnung sitzen. Der Befestigungsabschnitt, der in radialer Richtung über den Grundkörper hinausragt, sorgt dafür, dass der in der Verteilerrohröffnung eingebaute Gewindeeinsatz nicht aus der Verteilerrohröffnung herausfällt und der Gewindeeinsatz sicher in der Wandung des Rohrabschnitts gehalten wird.

Bei einer bevorzugten Ausführungsform weist der Befestigungsabschnitt wenigstens ein Befestigungselement auf, das sich in Richtung des zweiten Endabschnitts des Grundkörpers konisch verjüngt. Dadurch wird sichergestellt, dass der hohlzylindrische Grundkörper mit seinem zweiten Endabschnitt einfach durch die Öffnung hindurchgeführt werden kann und im eingefügten Zustand, in dem sich der Gewindeeinsatz in dem Verteilerrohr befindet, eine Art Rastverbindung ausbildet, die sicherstellt, dass der Gewindeeinsatz nicht mehr durch die Öffnung hindurchgelangt. Beispielsweise ist das Befestigungselement von daher als Rastelement ausgebildet.

Zur Erleichterung des Einführens des Gewindeeinsatzes in eine Öffnung ist es von Vorteil, dass an dem Grundkörper in axialer Richtung wenigstens ein zum zweiten Endabschnitt offener Schlitz vorgesehen ist.

Es ist weiter von Vorteil, dass sich das Innengewinde des Grundkörpers in Einführrichtung eines Einschraubelements verjüngt. Wird ein Einschraubelement in das Innengewinde eingeführt, führt dies dazu, dass sich der Grundkörper insbesondere im Bereich des Befestigungsabschnitts spreizt, so die Außenkontur des Grundkörpers im Bereich des Befestigungsabschnitts vergrößert wird. Hierdurch wird der Unterschied zwischen der Größe der Öffnung des Verteilerrohrs in Bezug auf die Außenkontur des Grundkörpers im Bereich des Befestigungsabschnitt weiter vergrößert, so dass hierdurch zusätzlich sichergestellt wird, dass der in einer Öffnung eines Verteilerrohrs eingebaute Gewindeeinsatz sich nicht versehentlich durch die Öffnung eines Verteilerohrs löst.

Es ist weiter bevorzugt, dass eine umlaufende Nut zur Lagerung eines Dichtrings vorgesehen ist, um die erforderliche Dichtigkeit zwischen Verteilerrohr und Gewindeeinsatz herzustellen bzw. zu verbessern. Der Dichtring kann bereits während des Herstellungsprozesses des Gewindeeinsatzes in der Nut befestigt werden und somit einstückig mit dem Gewindeeinsatz verbunden sein oder nachträglich als separates Bauteil in die umlaufende Nut eingesetzt werden.

Zur Erhöhung der Verdrehsicherheit beim Einschrauben eines Einschraubelements in den Gewindeeinsatz ist es erfindungsgemäß vorgesehen, dass der Grundkörper wenigstens im Bereich des Kontaktabschnitts einen ovalen oder eckigen Außenumfang aufweist.

Um den Gewindeeinsatz in einem runden oder in einem eckigen Rohr einsetzen zu können, ist bei einer bevorzugten Ausführungsform vorgesehen, dass der Auflagekopf eine Unterseite aufweist, die der Kontur des jeweiligen runden oder eckigen Rohres angepasst ist.

Um den Gewindeeinsatz möglichst kostengünstig herzustellen, ist der Gewindeeinsatz vorzugsweise aus Kunststoff hergestellt.

Gegenstand der Erfindung ist auch ein Verteilerrohr gemäß Anspruch 9 mit einem Gewindeeinsatz erster Art, wobei das Verteilerrohr wenigstens eine Öffnung aufweist. Hierbei entspricht der Gewindeeinsatz erster Art dem Gewindeeinsatz gemäß einem der vorherigen Ansprüche.

Bei einer bevorzugten Ausführungsform eines Verteilerrohrs liegt der Befestigungsabschnitt des Gewindeeinsatzes an der Wandungsseite des Rohrabschnitts an, die entgegengesetzt zu der Wandungsseite des Rohrabschnitts ist, an der das Auflageelement aufliegt. Hierdurch kann der Gewindeeinsatz sicher in dem Verteilerrohr gehalten werden.

Bei einer bevorzugten Weiterbildung weist der Rohrleitungsabschnitt in radialer Richtung entgegengesetzt zu der ersten Öffnung noch eine zweite Öffnung auf, wobei in jeder Öffnung ein Gewindeeinsatz erster Art vorgesehen ist.

Bei einer alternativen Ausführungsform weist der Rohrleitungsabschnitt in radialer Richtung entgegengesetzt zu der ersten Öffnung eine zweite Öffnung auf, wobei in der ersten Öffnung ein Gewindeeinsatz erster Art und in der zweiten Öffnung ein Gewindeeinsatz zweiter Art vorgesehen sind. Der Gewindeeinsatz zweiter Art umfasst einen hohlzylindrischen Grundkörper mit einem ersten Endabschnitt, einem zweiten Endabschnitt und mit einem Innengewinde sowie an dem ersten Endabschnitt des Grundkörpers einen Auflagekopf, der in radialer Richtung des Grundkörpers über den Grundkörper hinausragt, wobei der Gewindeeinsatz zweiter Art an seinem zweiten Endabschnitt wenigstens ein Aufnahmeelement zur Aufnahmen des wenigstens einen Befestigungselements des Gewindeeinsatzes erster Art aufweist.

Bei dieser Ausführungsform können zwei gegenüberliegende Einschraubelemente sicher miteinander verbunden werden, die sich darüber hinaus in ihrer axialen Richtung ausrichten und somit selbsttätig zentrieren.

Es ist weiter von Vorteil, dass die Öffnung des Verteilerrohrs eine ovale oder eckige Kontur aufweist und zumindest die Kontur des Kontaktabschnitts der Kontur der Öffnung des Verteilerrohrs entspricht. Somit wird eine Verdrehsicherheit gewährleistet.

Vorzugsweise ist die Öffnung des Verteilerrohrs gestanzt oder gelasert, so dass das Verteilerrohr möglichst kostengünstig herstellbar ist.

Bevorzugte Ausführungsformen werden in den beigefügten Zeichnungen näher erläutert, in denen zeigen:
- Fig. 1: eine erste Ausführungsform eines Gewindeeinsatzes in perspektivischer Ansicht,
- Fig. 2: einen Querschnitt durch den in Fig. 1 dargestellten Gewindeeinsatz,
- Fig. 3: den in Fig. 1 dargestellten Gewindeeinsatz in einer Ansicht von unten,
- Fig. 4: ein Verteilerrohr,
- Fig. 5: ein Anwendungsbeispiel mit einem Gewindeeinsatz gemäß der ersten Ausführungsform,
- Fig. 6: eine zweite Ausführungsform eines Gewindeeinsatzes in perspektivischer Ansicht,
- Fig. 7: den in Fig. 6 dargestellten Gewindeeinsatz in einer Ansicht von unten,
- Fig. 8: den in Fig. 6 dargestellten Gewindeeinsatz in einer Seitenansicht,
- Fig. 9: einen Querschnitt durch ein Verteilerrohr mit einem Gewindeeinsatz gemäß der zweiten Ausführungsform,
- Fig. 10: ein Verteilerrohr mit einem Gewindeeinsatz gemäß der zweiten Ausführungsform,
- Fig. 11: eine dritte Ausführungsform eines Gewindeeinsatzes in perspektivischer Ansicht,
- Fig. 12: die in Fig. 11 dargestellte dritte Ausführungsform eines Gewindeeinsatzes in Seitenansicht,
- Fig. 13: ein Verteilerohr mit einem Gewindeeinsatzes gemäß einer dritten Ausführungsform,
- Fig. 14: einen Gewindeeinsatz erster Art einer Gewindeeinsatzkombination,
- Fig. 15: einen Gewindeeinsatz zweiter Art einer Gewindeeinsatzkombination,
- Fig. 16: die Gewindeeinsatzkombination im Montagezustand, und
- Fig. 17: die Gewindeeinsatzkombination im Betriebszustand,

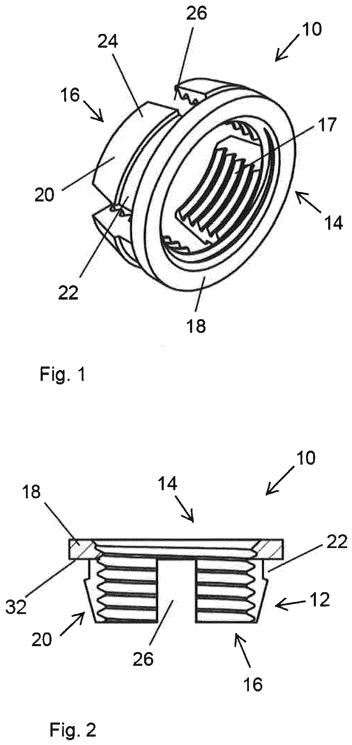

Die Figuren 1 bis 3 zeigen einen Gewindeeinsatz 10 gemäß einer ersten Ausführungsform. Wie am besten in Fig. 2 zu erkennen ist, weist der Gewindeeinsatz 10 einen hohlzylindrischen Grundkörper 12 mit einem ersten Endabschnitt 14 und einem zweiten Endabschnitt 16 auf. Im Inneren des hohlzylindrischen Grundkörpers ist ein sich von dem ersten Endabschnitt 14 zu dem zweiten Endabschnitt 16 verjüngendes Innengewinde 17 vorgesehen.

An dem ersten Endabschnitt 14 des Grundkörpers 12 befindet sich ein im Wesentlichen ringförmiger Auflagekopf 18, der in radialer Richtung des Grundkörpers 12 über den Grundkörper 12 hinausragt. In einem vorgegebenen Abstand von dem Auflagekopf 18 befindet sich in axialer Richtung des Grundkörpers 12 ein Befestigungsabschnitt 20. Der Befestigungsabschnitt 20 ragt wie der Auflagekopf 18 in radialer Richtung über den Grundkörper 12 hinaus, wobei der Befestigungsabschnitt 20 weniger über den Grundkörper hinausragt als der Auflagekopf 18. Zwischen dem Befestigungsabschnitt 20 und dem Auflagekopf 18 ist ein Kontaktabschnitt 22 vorgesehen, der nutartig ausgebildet ist. Der Befestigungsabschnitt 20 weist ein Befestigungselement 24 auf, das sich in Richtung des zweiten Endabschnitts 16 des Grundkörpers 12 konisch verjüngt.

An dem Grundkörper 12 befinden sich äquidistant angeordnete Schlitze 26, die sich in axialer Richtung des Grundkörpers 12 von dem zweiten Endabschnitt 16 des Grundkörpers 12 in Richtung des ersten Endabschnitts 14 des Grundkörpers 12 erstrecken. Die Schlitze 26 sind an dem zweiten Endabschnitt 16 offen. Die Befestigungselemente 24 zwischen zwei Schlitzen 26 sind als einstückige Rastelemente ausgebildet.

Das Vorsehen der Schlitze 26 in Verbindung mit dem Innengewinde 17, das sich von dem ersten Endabschnitt 14 zu dem zweiten Endabschnitts 16 verjüngt, führt zu einem Spreizen des Gewindeeinsatzes 10 während des Einführens eines Einschraubkörpers, so dass der Gewindeeinsatz 10 besonders sicher in einem Verteilerrohr gehalten wird.

Während der Auflagekopf 18 und der Grundkörper 12 jeweils eine im Querschnitt kreisförmige Innenkontur und Außenkontur aufweisen, sind die Außenkonturen des Kontaktabschnitts 22 und des Befestigungsabschnitts 20 oval ausgebildet.

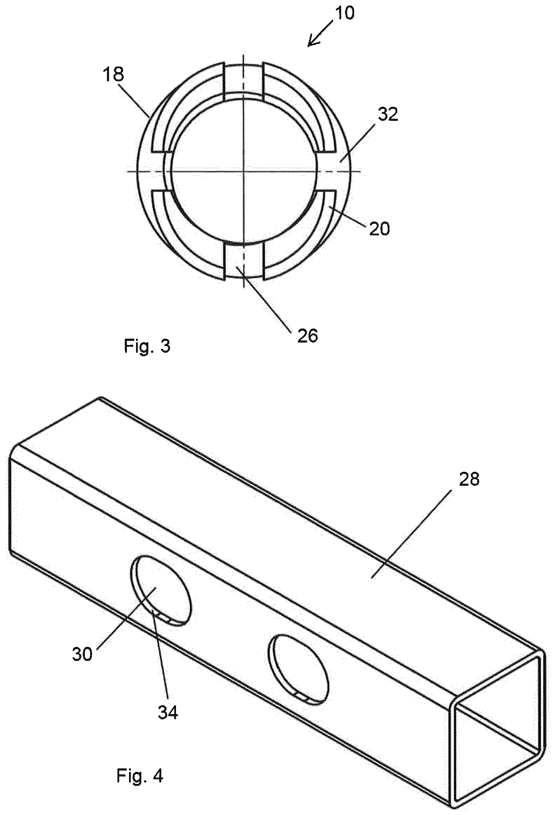

Fig. 4 zeigt ein Verteilerrohr 28, für welches die in den Figuren 1 bis 3 dargestellte Ausführungsform eines Gewindeeinsatzes 10 geeignet ist. Das Verteilerrohr 28 weist einen viereckigen, insbesondere quadratischen Querschnitt auf, wobei in einer Seite des Verteilerrohrs 28 zwei Öffnungen 30 mit ovaler Grundform eingearbeitet sind. Das Verteilerrohr 28 ist aus Metall und die Öffnungen 30 sind mittels Lasern oder Stanzen hergestellt.

Der Gewindeeinsatz 10 wird mit seinem zweiten Endabschnitt 16 voraus in die Öffnung 30 eingefügt, wobei der Gewindeeinsatz 10 so ausgerichtet ist, dass die ovale Kontur des Befestigungsabschnitts 20 und des Kontaktabschnitts 22 durch die Öffnung hindurchgeführt werden können. Die Unterseite 32 des Auflagekopfes 18 liegt auf der Außenseite des Verteilerrohrs 28 auf. Die Öffnungen 30 weisen Wände 34 auf, die annähernd passgenau in dem nutartig ausgebildeten Kontaktabschnitt 24 an dem Gewindeeinsatz 10 liegen. Der Befestigungsabschnitt 20, insbesondere das jeweilige Befestigungselement 24 steht mit seiner Oberseite in Kontakt mit der Innenseite des Verteilerrohrs 28.

Es versteht sich, dass der Gewindeeinsatz 10 nicht nur in Verteilerrohren 28 mit quadratischem Querschnitt einsetzbar ist, sondern auch in anderen Verteilerrohren, die einen beliebigen Querschnitt mit einer im Bereich der Öffnung ebenen Seitenfläche aufweisen.

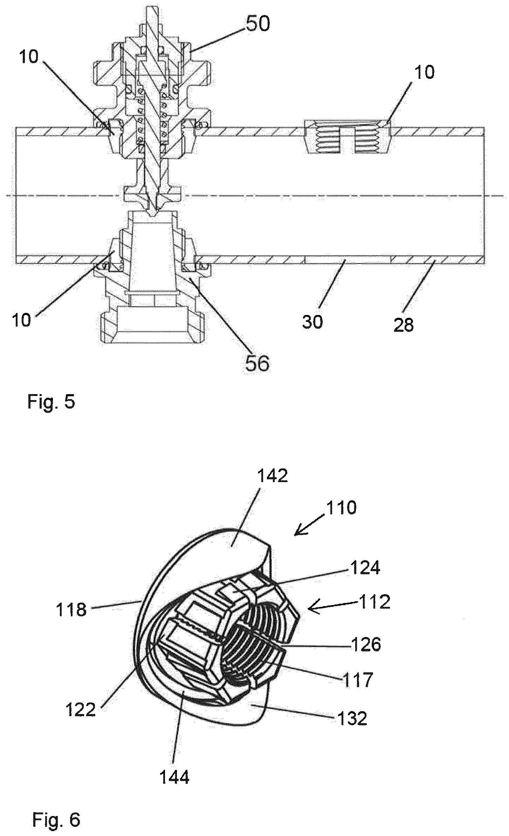

Fig. 5 zeigt ein Anwendungsbeispiel für einen Gewindeeinsatz 10. In dem Verteilerrohr 28 sind zwei zueinander entgegengesetzt liegende Öffnungen 30 vorgesehen. In jeder Öffnung 30 befindet sich ein Gewindeeinsatz 10. Ein erster Gewindeeinsatz 10 nimmt einen Durchflussmengenmessers 50 auf, während in einen zweiten Gewindeeinsatz 10 ein Ventilsitz 56 eingeschraubt ist.

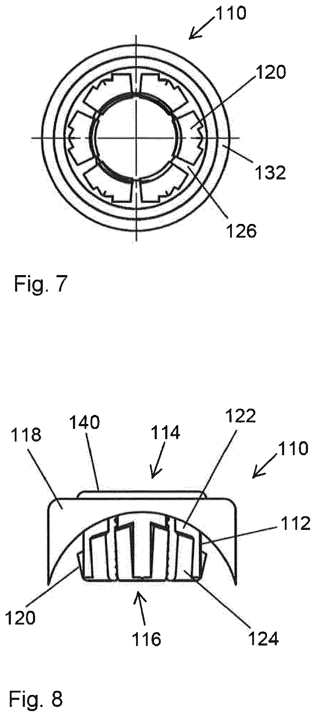

Die Figuren 6 bis 8 zeigen eine zweite Ausführungsform eines Gewindeeinsatzes 110 mit einem hohlzylindrischen Grundkörper 112, einem Auflagekopf 118, einem Befestigungsabschnitt 120 und einem Kontaktabschnitt 122 zwischen dem Befestigungsabschnitt 120 und dem Auflagekopf 118. Im Inneren des hohlzylindrischen Grundkörpers 112 ist ein sich von dem ersten Endabschnitt 114 zu dem zweiten Endabschnitt 116 verjüngendes Innengewinde 117 vorgesehen.

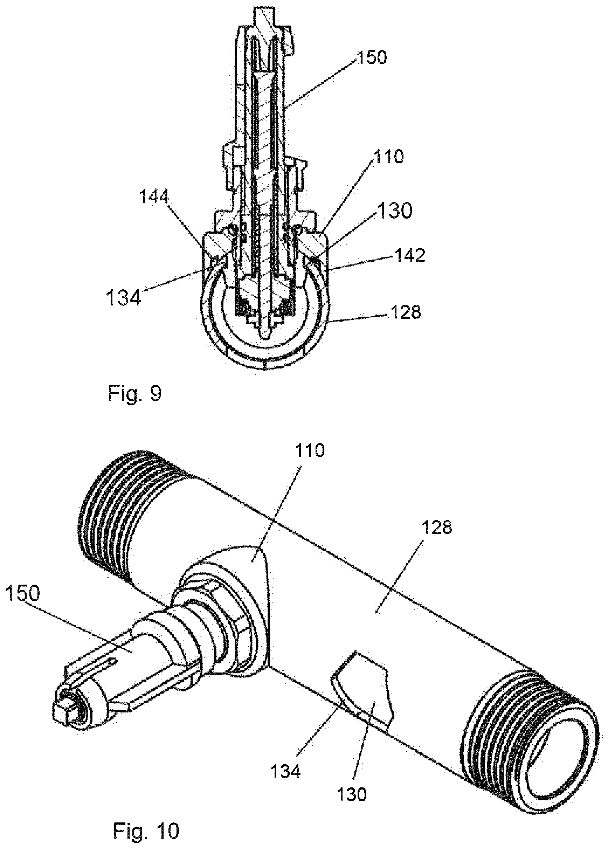

Wie die Fig. 9 und 10 zeigen, ist der Gewindeeinsatz 110 für den Einbau in einem Verteilerrohr 128 mit rundem Querschnitt geeignet.

Der Auflagekopf 118 weist eine ebene Oberseite 140 auf, auf der ein Einschraubelement 150 aufsitzen kann. Die Unterseite 132 des Auflagekopfs 118 ist sattelartig mit zwei entgegengesetzt liegenden Sattelblättern 142 gestaltet, so dass die Unterseite 132 des Auflagekopfes 118 auf der Oberseite eines Verteilerrohrs 128 mit rundem Querschnitt bündig aufliegt. Auf der Unterseite 132 des Auflagekopfs 118 ist eine Nut 144 zur Aufnahme einer Dichtung vorgesehen.

Der Befestigungsabschnitt 120 ist an den sattelartigen Verlauf der Unterseite 132 des Auflagekopfes 118 angepasst, so dass der Abstand zwischen Befestigungsabschnitt 120 und Unterseite des Auflagekopfes 118 im Wesentlichen konstant ist und der Kontaktabschnitt 122 als eine gekrümmte nutartige Vertiefung ausgebildet ist.

An dem Befestigungsabschnitt 120 ist eine Vielzahl von rastartigen Befestigungselementen 124 vorgesehen. Die Befestigungselemente 124 laufen in Richtung des zweiten Endabschnitts 116 des Grundkörpers 112 konisch zu.

Weiterhin weist der Gewindeeinsatz 110 Schlitze 126 auf, die sich in axialer Richtung des Grundkörpers 112 von dem zweiten Endabschnitt 116 in Richtung des ersten Endabschnitts 114 erstrecken, wobei die Schlitze 126 am zweiten Endabschnitt 116 offen sind.

Die Außenkonturen des Kontaktabschnitts 122 und des Befestigungsabschnitts 120 sind sechseckig ausgebildet.

Fig. 9 zeigt ein Verteilerrohr 128 mit dem Gewindeeinsatz 110 und einem Einschraubelement 150 in Form eines Durchflussmengenmessers. Der Gewindeeinsatz 110 liegt sattelartig auf der Außenseite des Verteilerrohrs 128 auf, wobei die Wand des Verteilerrohrs 128, insbesondere die Wand 134 der Öffnung 130, in den nutartig ausgebildeten Kontaktabschnitt 122 greift. Ein Dichtring in der Dichtungsnut 144 des Gewindeeinsatzes 110 sorgt für eine dichte Verbindung zwischen Gewindeeinsatz 110 und Verteilerrohr 128. Die als Rastelemente ausgebildeten Befestigungselemente 124 liegen an der Innenseite des Verteilerohrs 128 an.

Das Einschraubelement 150 ist in den Gewindeeinsatz 110 eingeschraubt, wobei das Einschraubelement 150 an der Oberseite 140 des Auflagekopfs 118 aufliegt.

Die Oberseite 140 des Auflagekopfes 118 kann den bisher eingesetzten Einschraubelementen 150 wie etwa den bisher eingesetzten Durchflussmengenmessers angepasst sein, so dass der Einsatz des Gewindeeinsatzes 110 in dem Verteilerrohr 128 keine baulichen Änderungen an den bisher bekannten Einschraubelementen 150 erfordert.

Wie in Fig. 10 dargestellt, so ist die Öffnung 130 in dem Verteilerrohr 128 sechseckig ausgeführt. Die sechseckige Ausführung des Kontaktabschnitts 122 sowie das Bereitstellen der Sattelblätter 142 sorgt dafür, dass sich der Gewindeeinsatz 110 nicht verdreht, wenn ein Einschraubelement 150 in den im Verteilerrohr 128 eingebauten Gewindeeinsatz 110 eingedreht wird.

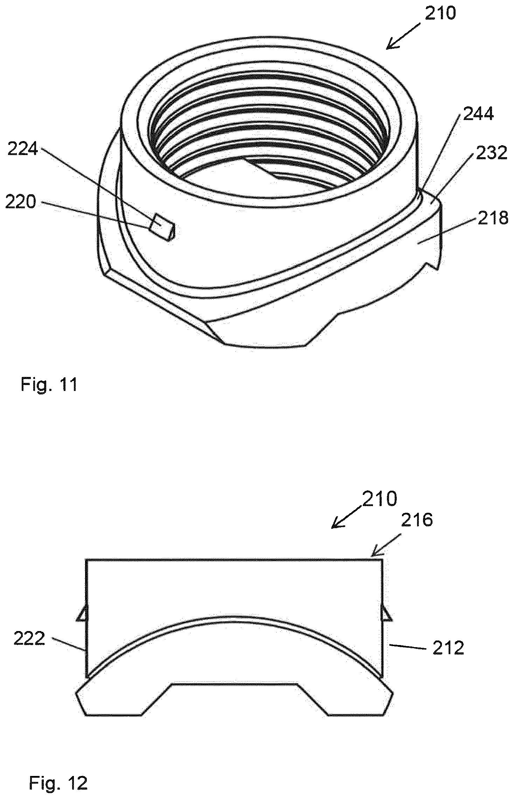

Die Figuren 11 und 12 zeigen eine dritte Ausführungsform eines Gewindeeinsatzes 210. Während bei den beiden bisher dargestellten ersten und zweiten Ausführungsformen eines Gewindeeinsatzes 10, 110 der Gewindeeinsatz 10, 110 von außen in das Verteilerrohr 28, 128 eingeführt wird, ist der Gewindeeinsatz 210 ausgelegt, um vom Rohrinneren durch eine Öffnung 30, 130 des Verteilerrohrs 28, 128 nach außen geführt zu werden.

Analog wie die Gewindeeinsätze 10, 110 weist der Gewindeeinsatz 210 einen Grundkörper 212 mit einem Auflagekopf 218, einem Befestigungsabschnitt 220 und einem Kontaktabschnitt 222 auf. Die Unterseite 232 des Auflagekopfs 218 liegt bei dem Gewindeeinsatz 210 an der Innenseite eines Rohrabschnitts eines Verteilerrohrs 228 an. Bei der dargestellten Ausführungsform ist das Befestigungselement 224 als Rastnase ausgebildet.

Der Auflagekopf 218 ist an seiner Unterseite 232 der Krümmung eines Rohrs mit rundem Querschnitt angepasst. Weiterhin ist eine umlaufende Nut 244 zur Lagerung einer Dichtung vorgesehen.

Bei einer nicht dargestellten Abwandlung der dritten Ausführungsform eines Gewindeeinsatzes 210 ist die Unterseite des Auflagekopfes 218 eben, um in einem Rohr mit eckigem Querschnitt eingesetzt werden zu können.

Zum Einbau des Gewindeeinsatzes 210 wird dieser auf ein spatelartiges Element positioniert und in den Innenraum des Verteilerrohrs 228 eingeführt. An der gewünschten Montageposition wird das spatelartige Element nach oben gehoben, wobei der Gewindeeinsatz 210 mit seinem zweiten Endabschnitt 216 voraus durch eine Öffnung 230 gedrückt wird und das als Rastnase ausgebildete Befestigungselement 224 mit der Außenseite des Rohrs 228 in Eingriff gelangt, insbesondere verrastet oder verklemmt.

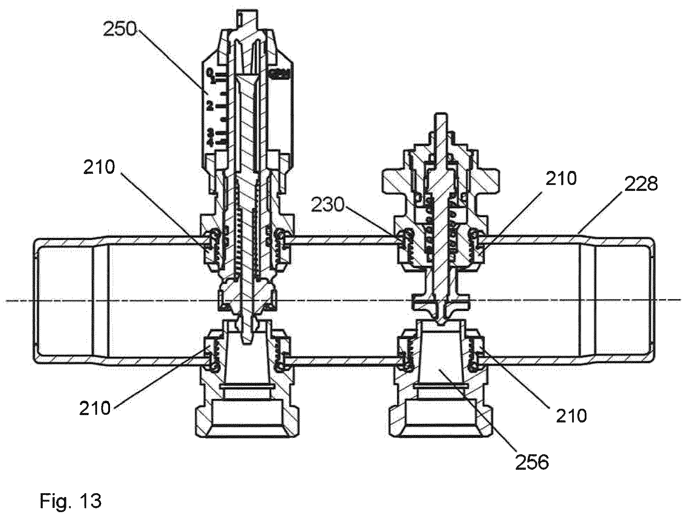

In Fig. 13 ist der montierte Zustand in einem Verteilerrohr 228 mit zwei zueinander entgegengesetzt liegende Öffnungen 230 dargestellt. In jeder Öffnung 230 befindet sich ein Gewindeeinsatz 210. Ein erster Gewindeeinsatz 210 nimmt einen Durchflussmengenmessers 250 auf, während in einen zweiten Gewindeeinsatz 210 ein Ventilsitz 256 eingeschraubt ist.

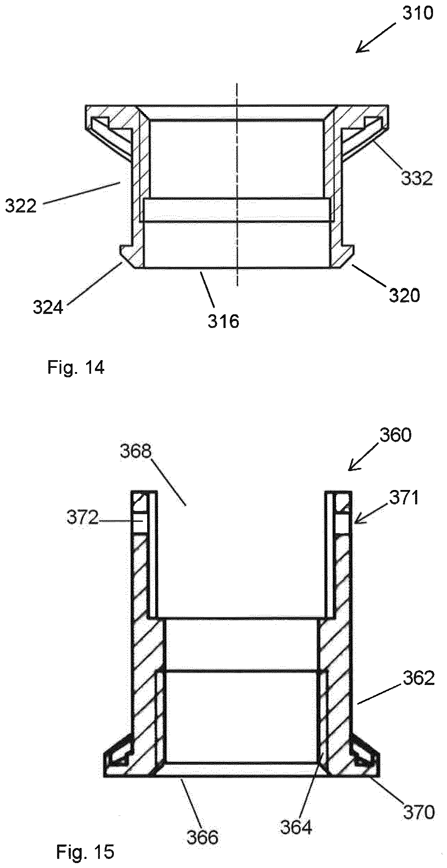

Die Figuren 14, 16 und 17 zeigen eine vierte Ausführungsform eines Gewindeeinsatzes 310 für ein Verteilerrohr 328. Der Gewindeeinsatz 310 ist Teil einer Gewindeeinsatzkombination und unterscheidet sich von den bisherigen Gewindeeinsätzen 10, 110 dadurch, dass der Kontaktabschnitt 322 verlängert ist, so dass der Befestigungsabschnitt 320 nicht mehr an der Innen- bzw. Außenseite des Verteilerrohrs anliegt. Der Gewindeeinsatz 310 bildet wie die Gewindeeinsätze 10, 110 einen Gewindeeinsatz erster Art.

Dieser Gewindeeinsatz erster Art 310 wechselwirkt mit einem in Fig. 15 dargestellten Gewindeeinsatz zweiter Art 360, der ebenfalls Teil der Gewindeeinsatzkombination ist. Der Gewindeeinsatz zweiter Art 360 umfasst einen hohlzylindrischen Grundkörper 362 mit einem Innengewinde 364, einem ersten Endabschnitt 366 und einem zweiten Endabschnitt 368 sowie einen Auflagekopf 370 am ersten Endabschnitt 366. Weiterhin ist ein Befestigungsabschnitt 371 vorgesehen. Dieser Befestigungsabschnitt 371 weist Aufnahmeelemente, insbesondere Öffnungen 372 auf, die mit den Befestigungselementen 324, nämlich den Rastnasen des Gewindeeinsatzes erster Art 310 wechselwirken.

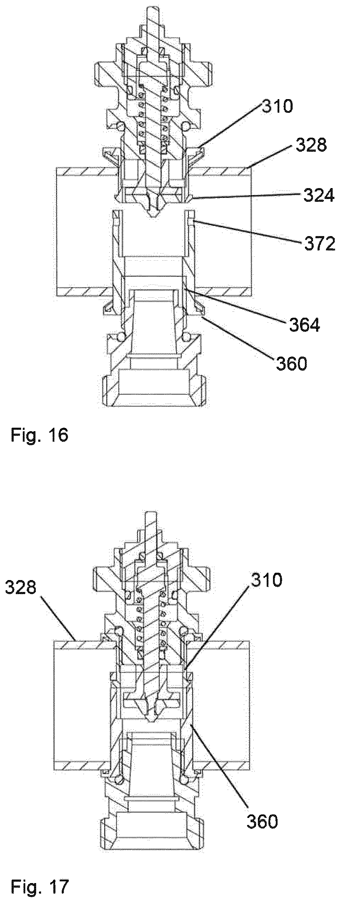

Wie Fig. 17 zeigt, sind im Betriebszustand der Gewindeeinsatz erster Art 310 und der Gewindeeinsatz zweiter Art 360 an ihrem zweiten Endabschnitt 316 bzw. 368 miteinander verrastet.

Die Gewindeeinsatzkombination kann sowohl in Verteilerrohren mit rundem als auch mit eckigem Querschnitt eingesetzt werden.

Bei den Ausführungsformen wurden ovale bzw. sechseckige Öffnungen in den Verteilerrohren gezeigt. Bei nicht dargestellten Ausführungsformen können die Öffnungen auch andere Formen aufweisen. Geeignet sind Formen für die Öffnungen, die von der runden Form abweichen, um eine Verdrehsicherheit zu gewährleisten, wie etwa ovale, sternförmige oder mehreckige Öffnungen. Um eine Verdrehsicherheit zu gewährleisten, ist es von Vorteil, dass zumindest der Außenumfang des Kontaktabschnitts des Gewindeeinsatzes die gleiche Form aufweist wie die Öffnung in dem Verteilerrohr.

Bei allen dargestellten Ausführungsformen können die Öffnungen in den metallischen Verteilerrohren mittels eines Stanz- oder Laserverfahrens hergestellt werden. Eine aufwändige Fließbohrung ist nicht notwendig.

Die Gewindeeinsätze sind darüber hinaus auch für den Einsatz in Verteilerrohren aus Kunststoff geeignet.

## Patentansprüche

1. Gewindeeinsatz geeignet für den Einbau in einem von einem Fluid durchflossenen Rohrabschnitt, umfassend:
einen hohlzylindrischen Grundkörper (12; 112; 212; 312) mit einem ersten Endabschnitt (14; 114) und einem zweiten Endabschnitt (16; 116; 216; 316) und mit einem Innengewinde (17);
einen Auflagekopf (18; 118; 218) an dem ersten Endabschnitt (14; 114) des Grundkörpers (12; 112; 212; 312), der in radialer Richtung des Grundkörpers (12; 112; 212; 312) über den Grundkörper (12; 112; 212; 312) hinausragt;
einen Befestigungsabschnitt (20; 120; 220; 320), der in axialer Richtung des Grundkörpers (12; 112; 212; 312) in einem vorgegebenen Abstand vom dem Auflagekopf (18; 118; 218) an dem Grundkörper (12; 112; 212; 312) angeordnet ist und in radialer Richtung über den Grundkörper (12; 112; 212; 312) hinausragt; und
einen Kontaktabschnitt (22; 122; 222; 322), der in axialer Richtung des Grundkörpers (12; 112; 212; 312) zwischen Auflagekopf (18; 118; 218) und Befestigungsabschnitt (20; 120; 220; 320) angeordnet und ausgelegt ist, dass in einem eingebauten Zustand eine Wand einer Verteilerrohröffnung an diesem anliegt, **dadurch gekennzeichnet, dass** der Grundkörper (12; 112; 212; 312) wenigstens im Bereich des Kontaktabschnitts (22; 122; 222; 322) einen ovalen oder eckigen Außenumfang aufweist.

2. Gewindeeinsatz nach Anspruch 1, **dadurch gekennzeichnet, dass** der Befestigungsabschnitt (20; 120; 220; 320) wenigstens ein Befestigungselement (24; 124; 224; 324) aufweist, das sich in Richtung des zweiten Endabschnitts (16; 116; 216; 316) des Grundkörpers (12; 112; 212; 312) konisch verjüngt.

3. Gewindeeinsatz nach einem der vorhergehenden Ansprüche, **dadurch gekennzeichnet, dass** an dem Grundkörper (12; 112; 312) in axialer Richtung wenigstens ein zum zweiten Endabschnitt (16; 116) offener Schlitz (26; 126) vorgesehen ist.

4. Gewindeeinsatz nach einem der vorhergehenden Ansprüche, **dadurch gekennzeichnet, dass** sich das Innengewinde des Grundkörpers (12; 112; 312) in Einführrichtung eines Einschraubelements (50, 56; 150) verjüngt.

5. Gewindeeinsatz nach einem der vorhergehenden Ansprüche, **dadurch gekennzeichnet, dass** eine umlaufende Nut (144) zur Lagerung eines Dichtrings vorgesehen ist.

6. Gewindeeinsatz nach einem der vorhergehenden Ansprüche, **dadurch gekennzeichnet, dass** der Auflagekopf (18; 118; 218) eine Unterseite (32; 132; 232) aufweist, die der Kontur eines runden oder eckigen Verteilerrohres angepasst ist.

7. Gewindeeinsatz nach einem der vorhergehenden Ansprüche, **dadurch gekennzeichnet, dass** der Gewindeeinsatz (10; 110; 210; 310) aus Kunststoff ist.

8. Verteilerrohr, umfassend einen von einem Fluid durchflossenen Rohrabschnitt mit einer Rohrwandung, in der wenigstens eine erste Öffnung (30; 130; 230) mit einer Wand (34; 134) vorgesehen ist und einen in der ersten Öffnung (30; 130; 230) angeordneten Gewindeeinsatz (10; 110; 210; 310) erster Art, wobei der Gewindeeinsatz erster Art ein Gewindeeinsatz nach einem der Ansprüche 1 bis 7 ist, **dadurch gekennzeichnet, dass** der Auflagekopf (18; 118; 218) mit seiner zum zweiten Endabschnitt (16; 116; 216; 316) des Grundkörpers (12; 112; 212; 312) weisenden Unterseite an einer Innen- oder Außenseite der Wandung des Rohrabschnitts aufliegt und die Wand (34; 134) der ersten Öffnung (30; 130; 230) an der Außenseite des Gewindeeinsatzes (10; 110; 210; 310) im Bereich des Kontaktabschnitts anliegt und dass die erste Öffnung (30; 130; 230) eine ovale oder eckige Kontur aufweist und zumindest die Kontur des Kontaktabschnitts (22; 122; 222; 322) der Kontur der ersten Öffnung (30; 130; 230) entspricht.

9. Verteilerrohr nach Anspruch 8, **dadurch gekennzeichnet, dass** der Befestigungsabschnitt (20; 120; 220) des Gewindeeinsatzes (10; 110; 210; 310) an der Wandungsseite des Rohrabschnitts anliegt, die entgegensetzt zu der Wandungsseite ist, an der der Auflagekopf (18; 118; 218) aufliegt.

10. Verteilerrohr nach Anspruch 8 oder 9, **dadurch gekennzeichnet, dass** der Rohrleitungsabschnitt in radialer Richtung entgegengesetzt zu der ersten Öffnung (30; 130; 230) eine zweite Öffnung (30; 130; 230) aufweist, wobei in jeder Öffnung (30; 130; 230) ein Gewindeeinsatz (10; 110; 210) erster Art vorgesehen ist.

11. Verteilerrohr nach Anspruch 8 oder 9, **dadurch gekennzeichnet, dass** der Rohrleitungsabschnitt in radialer Richtung entgegengesetzt zu der ersten Öffnung (30; 130; 230) eine zweite Öffnung (30; 130; 230) aufweist, wobei in der ersten Öffnung (30; 130; 230) ein Gewindeeinsatz erster Art (310) und in der zweiten Öffnung (30; 130; 230) ein Gewindeeinsatz zweiter Art (360) vorgesehen sind, wobei der Gewindeeinsatz zweiter Art (360) einen hohlzylindrischen Grundkörper (362) mit einem ersten Endabschnitt (366), einem zweiten Endabschnitt (368) und mit einem Innengewinde (364) sowie an dem ersten Endabschnitt (366) des Grundkörpers (362) einen Auflagekopf (370), der in radialer Richtung des Grundkörpers (362) über den Grundkörper (362) hinausragt, umfasst und wobei der Gewindeeinsatz zweiter Art (360) an seinem zweiten Endabschnitt (368) wenigstens ein Aufnahmeelement zur Aufnahmen des wenigstens einen Befestigungselements (324) des Gewindeeinsatzes erster Art (310) aufweist.

12. Verteilerrohr nach Anspruch 11, **dadurch gekennzeichnet, dass** die zweite Öffnung (30; 130; 230) eine ovale oder eckige Kontur aufweist und zumindest die Kontur des Kontaktabschnitts (22; 122; 222; 322) der Kontur der zweiten Öffnung (30; 130; 230) entspricht.

13. Verteilerrohr nach einem der Ansprüche 8 bis 12, **dadurch gekennzeichnet, dass** die Öffnung (30; 130; 230) gestanzt oder gelasert ist.

## Claims

1. Threaded insert suitable for installation in a pipe portion through which a fluid flows, the threaded insert comprising:
a hollow cylindrical main body (12; 112; 212; 312) having a first end portion (14; 114) and a second end portion (16; 116; 216; 316) and having an internal thread (17);
a bearing head (18; 118; 218) on the first end portion (14; 114) of the main body (12; 112; 212; 312), which bearing head protrudes beyond the main body (12; 112; 212; 312) in the radial direction of the main body (12; 112; 212; 312);
a fastening portion (20; 120; 220; 320), which is arranged on the main body (12; 112; 212; 312) at a predetermined distance from the bearing head (18; 118; 218) in the axial direction of the main body (12; 112; 212; 312) and protrudes beyond the main body (12; 112; 212; 312) in the radial direction; and
a contact portion (22; 122; 222; 322), which is arranged and designed between the bearing head (18; 118; 218) and the fastening portion (20; 120; 220; 320) in the axial direction of the main body (12; 112; 212; 312) such that, in an installed state, a wall of a distributing pipe opening rests against said contact portion, **characterised in that** the main body (12; 112; 212; 312) has an oval or polygonal outer periphery at least in the region of the contact portion (22; 122; 222; 322).

2. Threaded insert according to claim 1, **characterised in that** the fastening portion (20; 120; 220; 320) has at least one fastening element (24; 124; 224; 324) which tapers conically in the direction of the second end portion (16; 116; 216; 316) of the main body (12; 112; 212; 312).

3. Threaded insert according to either of the preceding claims, **characterised in that** at least one slot (26; 126) which is open to the second end portion (16; 116) is provided on the main body (12; 112; 312) in the axial direction.

4. Threaded insert according to any of the preceding claims, **characterised in that** the internal thread of the main body (12; 112; 312) tapers in the direction of insertion of a screw-in element (50, 56; 150).

5. Threaded insert according to any of the preceding claims, **characterised in that** a peripheral groove (144) is provided for mounting a sealing ring.

6. Threaded insert according to any of the preceding claims, **characterised in that** the bearing head (18; 118; 218) has a lower side (32; 132; 232) which is adapted to the contour of a round or polygonal distributing pipe.

7. Threaded insert according to any of the preceding claims, **characterised in that** the threaded insert (10; 110; 210; 310) is made of plastics material.

8. Distributing pipe, comprising a pipe portion through which a fluid flows, the pipe portion having a pipe wall in which at least one first opening (30; 130; 230) having a wall (34; 134) is provided and a threaded insert (10; 110; 210; 310) of the first type arranged in the first opening (30; 130; 230), the threaded insert of the first type being a threaded insert according to any of claims 1 to 7, **characterised in that** the bearing head (18; 118; 218) rests, via its lower side facing the second end portion (16; 116; 216; 316) of the main body (12; 112; 212; 312), on an inner or outer side of the wall of the tube portion and the wall (34; 134) of the first opening (30; 130; 230) rests on the outer side of the threaded insert (10; 110; 210; 310) in the region of the contact portion and **in that** the first opening (30; 130; 230) has an oval or polygonal contour and at least the contour of the contact portion (22; 122; 222; 322) corresponds to the contour of the first opening (30; 130; 230).

9. Distributing pipe according to claim 8, **characterised in that** the fastening portion (20; 120; 220) of the threaded insert (10; 110; 210; 310) rests on the wall side of the pipe portion which is opposite to the wall side on which the bearing head (18; 118; 218) rests.

10. Distributing pipe according to either claim 8 or claim 9, **characterised in that** the pipe portion has a second opening (30; 130; 230) opposite the first opening (30; 130; 230) in the radial direction, a threaded insert (10; 110; 210) of the first type being provided in each opening (30; 130; 230).

11. Distributing pipe according to either claim 8 or claim 9, **characterised in that** the pipe portion has a second opening (30; 130; 230) opposite the first opening (30; 130; 230) in the radial direction, a threaded insert of the first type (310) being provided in the first opening (30; 130; 230) and a threaded insert of the second type (360) being provided in the second opening (30; 130; 230), the threaded insert of the second type (360) comprising a hollow cylindrical main body (362) having a first end portion (366), a second end portion (368) and having an internal thread (364) and a bearing head (370) on the first end portion (366) of the main body (362), which bearing head protrudes beyond the main body (362) in the radial direction of the main body (362), and the threaded insert of the second type (360) having, on its second end portion (368), at least one receiving element for receiving the at least one fastening element (324) of the threaded insert of the first type (310).

12. Distributing pipe according to claim 11, **characterised in that** the second opening (30; 130; 230) has an oval or polygonal contour and at least the contour of the contact portion (22; 122; 222; 322) corresponds to the contour of the second opening (30; 130; 230).

13. Distributing pipe according to any of claims 8 to 12, **characterised in that** the opening (30; 130; 230) is punched or lasered.

## Revendications

1. Pièce filetée insérable se prêtant à l'intégration dans un tronçon tubulaire parcouru par un fluide, comprenant :
un corps de base (12 ; 112 ; 212 ; 312) cylindrique creux, muni d'une première région extrême (14 ; 114), d'une seconde région extrême (16 ; 116 ; 216 ; 316) et d'un filetage intérieur (17) ;
au niveau de la première région extrême (14 ; 114) du corps de base (12 ; 112 ; 212 ; 312), une tête de support (18 ; 118 ; 218) faisant saillie au-delà dudit corps de base (12 ; 112 ; 212 ; 312) dans la direction radiale dudit corps de base (12 ; 112 ; 212 ; 312) ;
une zone de fixation (20 ; 120 ; 220 ; 320) qui est située sur le corps de base (12 ; 112 ; 212 ; 312) dans la direction axiale dudit corps de base (12; 112 ; 212 ; 312), à une distance préétablie de la tête de support (18 ; 118 ; 218), et qui fait saillie dans la direction radiale au-delà dudit corps de base (12 ; 112 ; 212 ; 312) ; et
une zone de contact (22 ; 122 ; 222 ; 322) qui est interposée entre la tête de support (18 ; 118 ; 218) et la zone de fixation (20 ; 120 ; 220 ; 320), dans la direction axiale du corps de base (12 ; 112 ; 212 ; 312), et est conçue de façon telle qu'une paroi d'une ouverture d'une tubulure de distribution y soit en applique à l'état intégré, **caractérisée par le fait que** le corps de base (12 ; 112 ; 212 ; 312) est doté d'un pourtour extérieur ovale ou angulaire, au moins dans la région de la zone de contact (22 ; 122 ; 222 ; 322).

2. Pièce filetée insérable selon la revendication 1, **caractérisée par le fait que** la zone de fixation (20 ; 120 ; 220 ; 320) est pourvue d'au moins un élément de fixation (24 ; 124 ; 224 ; 324) s'amenuisant tronconiquement en direction de la seconde région extrême (16 ; 116 ; 216 ; 316) du corps de base (12 ; 112 ; 212 ; 312).

3. Pièce filetée insérable selon l'une des revendications précédentes, **caractérisée par le fait qu'**au moins une fente (26 ; 126), ouverte vers la seconde région extrême (16 ; 116), est prévue sur le corps de base (12 ; 112 ; 312) dans la direction axiale.

4. Pièce filetée insérable selon l'une des revendications précédentes, **caractérisée par le fait que** le filetage intérieur du corps de base (12 ; 112 ; 312) s'amenuise dans la direction d'insertion d'un élément vissable (50, 56 ; 150).

5. Pièce filetée insérable selon l'une des revendications précédentes, **caractérisée par le fait qu'**une rainure périphérique (144) est prévue pour le montage d'une bague d'étanchement.

6. Pièce filetée insérable selon l'une des revendications précédentes, **caractérisée par le fait que** la tête de support (18 ; 118 ; 218) présente une face inférieure (32 ; 132 ; 232) adaptée au profil d'une tubulure de distribution ronde ou angulaire.

7. Pièce filetée insérable selon l'une des revendications précédentes, **caractérisée par le fait que** ladite pièce filetée insérable (10 ; 110 ; 210 ; 310) est en matière plastique.

8. Tubulure de distribution comprenant un tronçon tubulaire parcouru par un fluide et muni d'une paroi tubulaire dans laquelle est prévue au moins une première ouverture (30 ; 130 ; 230) comportant une paroi (34 ; 134), et une pièce filetée insérable (10 ; 110 ; 210 ; 310) d'un premier type, logée dans ladite première ouverture (30 ; 130 ; 230), laquelle pièce filetée insérable d'un premier type est une pièce filetée insérable conforme à l'une des revendications 1 à 7, **caractérisée par le fait que** la tête de support (18 ; 118 ; 218) repose, par sa face inférieure orientée vers la seconde région extrême (16 ; 116 ; 216 ; 316) du corps de base (12 ; 112 ; 212 ; 312), sur une face intérieure ou extérieure de la paroi du tronçon tubulaire, et la paroi (34 ; 134) de la première ouverture (30 ; 130 ; 230) est en applique contre la face extérieure de la pièce filetée insérable (10 ; 110 ; 210 ; 310) dans la région de la zone de contact ; et **par le fait que** ladite première ouverture (30 ; 130 ; 230) est dotée d'un profil ovale ou angulaire, et au moins le profil de ladite zone de contact (22 ; 122 ; 222 ; 322) correspond au profil de ladite première ouverture (30 ; 130 ; 230).

9. Tubulure de distribution selon la revendication 8, **caractérisée par le fait que** la zone de fixation (20 ; 120 ; 220) de la pièce filetée insérable (10 ; 110 ; 210 ; 310) est en applique contre le côté de la paroi du tronçon tubulaire qui pointe à l'opposé du côté de ladite paroi sur lequel la tête de support (18 ; 118 ; 218) repose.

10. Tubulure de distribution selon la revendication 8 ou 9, **caractérisée par le fait que** le tronçon de conduit tubulaire est pourvu d'une seconde ouverture (30; 130 ; 230) pointant à l'opposé de la première ouverture (30 ; 130 ; 230), dans la direction radiale, sachant qu'une pièce filetée insérable (10 ; 110 ; 210) d'un premier type est prévue dans chaque ouverture (30 ; 130 ; 230).

11. Tubulure de distribution selon la revendication 8 ou 9, **caractérisée par le fait que** le tronçon de conduit tubulaire est pourvu d'une seconde ouverture (30 ; 130 ; 230) pointant à l'opposé de la première ouverture (30 ; 130 ; 230), dans la direction radiale, sachant qu'une pièce filetée insérable (310) d'un premier type et une pièce filetée insérable (360) d'un second type sont respectivement prévues dans ladite première ouverture (30 ; 130 ; 230), et dans ladite seconde ouverture (30 ; 130 ; 230), sachant que ladite pièce filetée insérable (360) du second type comprend un corps de base (362) cylindrique creux, muni d'une première région extrême (366), d'une seconde région extrême (368) et d'un filetage intérieur (364), ainsi que, au niveau de ladite première région extrême (366) du corps de base (362), une tête de support (370) faisant saillie au-delà dudit corps de base (362) dans la direction radiale dudit corps de base (362), et sachant que ladite pièce filetée insérable (360) du second type est pourvue, au niveau de sa seconde région extrême (368), d'au moins un élément de réception conçu pour recevoir l'élément de fixation (324), à présence minimale, de ladite pièce filetée insérable (310) du premier type.

12. Tubulure de distribution selon la revendication 11, **caractérisée par le fait que** la seconde ouverture (30 ; 130 ; 230) est dotée d'un profil ovale ou angulaire, et au moins le profil de la zone de contact (22 ; 122 ; 222 ; 322) correspond au profil de ladite seconde ouverture (30 ; 130 ; 230).

13. Tubulure de distribution selon l'une des revendications 8 à 12, **caractérisée par le fait que** l'ouverture (30 ; 130 ; 230) est poinçonnée ou façonnée au laser.
